Europäisches Patentamt

European Patent Office

Office européen des brevets

(11) Publication number : **0 682 975 A1**

## EUROPEAN PATENT APPLICATION

(21) Application number : 95302636.6

(22) Date of filing : 20.04.95

(51) Int. Cl.⁶ : **B01D 53/94,** B01J 23/68, B01J 23/64

(30) Priority : 20.04.94 JP 104601/94
20.04.94 JP 104604/94
10.08.94 JP 209240/94
11.08.94 JP 210628/94
24.08.94 JP 222534/94
24.08.94 JP 222537/94

(43) Date of publication of application :
22.11.95 Bulletin 95/47

(84) Designated Contracting States :
DE FR GB

(71) Applicant : **KABUSHIKI KAISHA RIKEN**
**13-5, Kudan-Kita 1-chome**
**Chiyoda-ku Tokyo 102 (JP)**

(72) Inventor : **Abe, Akira, c/o K.K. Riken**
**Kumagaya Plant,**
**14-1 Suehiro 4-Chome**
**Kamugaya-shi, Saitama-ken (JP)**
Inventor : **Yoshida, Kiyohide, c/o K.K. Riken**
**Kumagaya Plant,**
**14-1 Suehiro 4-Chome**
**Kamugaya-shi, Saitama-ken (JP)**
Inventor : **Saito, Mika, c/o K.K. Riken**
**Kumagaya Plant,**
**14-1 Suehiro 4-Chome**
**Kamugaya-shi, Saitama-ken (JP)**

(74) Representative : **Calamita, Roberto**
**Frank B. Dehn & Co.**
**Imperial House**
**15-19 Kingsway**
**London WC2B 6UZ (GB)**

(54) **Device and method for cleaning exhaust gas.**

(57)    An exhaust gas cleaner constituted by a first catalyst comprising an alumina-based composite oxide carrying an Ag component and optionally a second catalyst comprising a transition metal catalyst comprising a porous inorganic oxide carrying a transition metal component, a Pt catalyst comprising a porous inorganic oxide carrying a Pt component or a mixture of the transition metal catalyst and the Pt catalyst. The exhaust gas cleaner can effectively remove nitrogen oxides together with hydrocarbons and carbon monoxide from an exhaust gas containing sulfur oxides.

EP 0 682 975 A1

## BACKGROUND OF THE INVENTION

The present invention relates to an exhaust gas cleaner for effectively removing nitrogen oxides together with carbon monoxide and hydrocarbons from an exhaust gas containing nitrogen oxides, sulfur oxides and an excess amount of oxygen, and a method for cleaning an exhaust gas with such an exhaust gas cleaner.

Various exhaust gases discharged from internal combustion engines such as automobile engines, etc., combustion apparatuses installed in factories, home fun heaters, etc. contain nitrogen oxides such as nitrogen monoxide and nitrogen dioxide together with an excess amount of oxygen. The term "containing an excess amount of oxygen" means that the oxygen content is larger than its stoichiometric amount relative to unburned components such as carbon monoxide, hydrogen, hydrocarbons in the exhaust gas. The term "nitrogen oxides" (NOx) means nitrogen monoxide and/or nitrogen dioxide.

The nitrogen oxides are one of causes of acid rain, posing a serious problem of environmental pollution. For these reasons, various methods have been proposed to remove nitrogen oxides from exhaust gases emitted from various combustion equipment.

In the case of large, stationary combustion apparatuses such as large combustion apparatuses of factories, ammonia is introduced into an exhaust gas, whereby nitrogen oxides in the exhaust gas are catalytically and selectively reduced (a selective catalytic reduction).

However, such a method is disadvantageous, because ammonia is expensive, because ammonia is so toxic that the amount of ammonia should be controlled by measuring the concentration of nitrogen oxides in the exhaust gas, and because this reduction system generally needs large apparatuses.

There is an alternative method for reducing NOx, which comprises contacting an exhaust gas containing oxygen and NOx with a gaseous reducing agent such as hydrogen or carbon monoxide. However, this method requires a larger amount of the reducing agent than its stoichiometric amount relative to oxygen in the exhaust gas to carry out effective removal of NOx. Accordingly, this method is effective only for the exhaust gas having a relatively low oxygen concentration, which is generated by burning nearly at a theoretical air-fuel ratio.

There have been proposed methods of reducing nitrogen oxides by adding to an exhaust gas a reducing agent in a smaller amount than a stoichiometric amount relative to oxygen in the exhaust gas, in the presence of a catalyst such as zeolite with or without carrying a transition metal (Japanese Patent Laid-Open Nos. 63-100919, 63-283727 and 1-130735; Thesis 2A526, 1990, the 59th Spring Conference of the Japan Chemical Society; Theses 3L420, 3L422 and 3L423, 1990, the 60th Fall Conference of the Japan Chemical Society; and "Catalyst", Vol. 33, No. 2, p.59 (1991)).

However, these methods are effective only in a narrow temperature range of NOx removal. Also, their efficiency of removing nitrogen oxides is extremely low in the case of an actual exhaust gas because it contains about 10% of moisture. The inventor has proposed the following several method.

In JP-A-5-317647 (corresponding to U.S.S.N. 08/104,894 and EP 92306728.4), an exhaust gas containing about 10% of moisture is passed through an exhaust gas cleaner comprising an Ag catalyst after added with an alcohol . However, the exhaust gas cleaner is still insufficient in the NOx removal when the exhaust gas contains sulfur oxides (SOx).

In JP 5-234200 (corresponding to U.S.S.N. 08/295,012 and EP 94306320.6), a method of removing NOx by passing an exhaust gas through an exhaust gas cleaner comprising a first catalyst comprising a porous inorganic oxide such as alumina carrying Ag component and a second catalyst comprising a porous inorganic oxide carrying a transition metal component such as W, V etc. is disclosed. However, it has been found that the exhaust gas cleaner is insufficient in the removal of NOx from an exhaust gas contains sulfur oxides (SOx) because the Ag component is likely to cause sintering to reduce the effective surface area of the catalytically active component.

In JP-A-6-142523 (corresponding to U.S.S.N. 08/336,908 and EP 93305235.9), proposed is a method of effectively removing NOx together with CO and residual hydrocarbons from exhaust gas by using an exhaust gas cleaner constituted of a first catalyst comprising a porous inorganic oxide such as alumina carrying Ag component and a second catalyst comprising a porous inorganic oxide carrying Pt component. In JP 6-85770 (corresponding to U.S.S.N. 08/360,025 and EP 94309721.2), an exhaust gas cleaner capable of removing NOx together with CO and hydrocarbons from an exhaust gas containing 10 % moisture, which is constituted by an Ag catalyst on the inlet side and transition metal-Pt catalyst on the outlet side is proposed. However, it has been found that such exhaust gas cleaners are insufficient in the removal of NOx from an exhaust gas contains sulfur oxides (SOx) because the Ag component is likely to cause sintering to reduce the effective surface area.

## OBJECT AND SUMMARY OF THE INVENTION

Accordingly, an object of the present invention is to provide an exhaust gas cleaner and a method capable of efficiently removing nitrogen oxides by reduction together with residual or unburned components such as carbon monoxide and hydrocarbons by oxidation from an exhaust gas containing nitrogen oxides, sulfur oxides and oxygen in an amount larger than the stoichiometric amount relative to unburned components such as carbon monoxide, hydrogen, hydrocarbons, etc., which is discharged from stationary combustion apparatuses, gasoline engines operated under oxygen excess conditions, and diesel engines.

As a result of intense research in view of the above objects, the inventors have found that nitrogen oxides are effectively removed from an exhaust gas containing SOx when the exhaust gas is passed through an exhaust gas cleaner comprising a catalyst of Ag and/or Ag compounds supported on a particular alumina-based composite oxide at a predetermined temperature. The inventors have further found that ammonia is formed as a by-product by a reaction between an organic compound such as ethanol and nitrogen oxides in the presence of oxygen over a catalyst comprising an Ag component carried on a particular alumina-based composite oxide containing a porous inorganic oxide such as silica in a specific amount. Based on this finding, the present inventors have further found that NOx can be effectively removed even from an exhaust gas containing sulfur dioxides in a wide temperature range when the exhaust gas added with a reducing agent such as hydrocarbons and oxygen-containing organic compounds is passed through an exhaust gas cleaner comprising a combination of the Ag catalyst and a transition metal catalyst such as W, V and Mo, a Pt catalyst, or a mixed catalyst of the transition metal catalyst and a Pt catalyst. The present invention has been completed based on these findings.

Thus, in a first aspect of the present invention, there is provided an exhaust gas cleaner for removing nitrogen oxides by reduction and unburned components of carbon monoxide and hydrocarbons by oxidation from an exhaust gas containing nitrogen oxides, sulfur oxides and oxygen in an amount larger than its stoichiometric amount relative to the unburned components in the exhaust gas, wherein said exhaust gas cleaner is constituted by (1) a first catalyst comprising a first porous inorganic oxide supporting 0.2-15 weight % of at least one Ag component selected from the group consisting of Ag and Ag compounds, and (2) a optional second catalyst comprising (a) a Pt catalyst comprising a second porous inorganic oxide supporting 5 weight % or less of at least one Pt component selected from the group consisting of Pt, Pd, Ru, Rh, Ir and Au, (b) a transition metal catalyst comprising a third porous inorganic oxide supporting 0.5-30 weight % of at least one transition metal component selected from the group consisting of W, V and Mo, or (c) a mixture of the Pt catalyst and the transition metal catalyst, the first porous inorganic oxide being an alumina-based composite oxide comprising alumina and at least one oxide selected from the group consisting of silica, titania and zirconia, the second porous inorganic oxide being alumina, titania, zirconia, silica, zeolite or a composite oxide thereof, and the third porous inorganic oxide being titania or a titania-based composite oxide comprising titania and at least one oxide selected from the group consisting of alumina, silica and zirconia, with the proviso that the first porous inorganic oxide includes alumina when the second catalyst is the mixed catalyst of the Pt catalyst and the transition metal catalyst.

In a second aspect of the present invention, there is provided an exhaust gas cleaner for removing nitrogen oxides by reduction and unburned components of carbon monoxide and hydrocarbons by oxidation from an exhaust gas containing nitrogen oxides, sulfur oxides and oxygen in an amount larger than its stoichiometric amount relative to the unburned components in the exhaust gas, wherein the exhaust gas cleaner is constituted by a catalyst comprising a porous inorganic oxide supporting 0.2-15 weight % of at least one Ag component selected from the group consisting of Ag and Ag compounds and 5 weight % or less of at least one transition metal component selected from the group consisting of W, V, Mn, Mo, Nb and Ta, the porous inorganic oxide being an alumina-based composite oxide comprising alumina and at least one oxide selected from the group consisting of silica, titania and zirconia.

In a third aspect of the present invention, there is provided a method for removing nitrogen oxides by reduction and unburned components of carbon monoxide and hydrocarbons by oxidation from an exhaust gas containing nitrogen oxides, sulfur oxides and oxygen in an amount larger than its stoichiometric amount relative to said unburned components in said exhaust gas, which comprises disposing the exhaust gas cleaner as defined above in a flow path of said exhaust gas; introducing into said exhaust gas at least one reducing agent selected from the group consisting of hydrocarbons and oxygen-containing organic compounds having at least two carbon atoms or a fuel containing said at least one reducing agent on an upstream side of said exhaust gas cleaner; and bringing the resulting exhaust gas containing said reducing agent into contact with said exhaust gas cleaner at 150-650°C, thereby causing a reaction of said nitrogen oxides with said reducing agent to remove said nitrogen oxides by reduction and unburned components of carbon monoxide and hydrocarbons by oxidation from said exhaust gas.

## BRIEF DESCRIPTION OF THE DRAWINGS

Fig. 1 is a graph showing the dependency of the removal ratio of NOx on the exhaust gas temperature in Examples 1 and 2 and Comparative Examples 1 and 2;

Fig. 2 is a graph showing the dependency of the removal ratio of NOx on the exhaust gas temperature in Examples 3 and 4 and Comparative Examples 3 and 4; and

Fig. 3 is a graph showing the dependency of the removal ratio of NOx on the exhaust gas temperature in Example 4a and Comparative Example 4a.

## DETAILED DESCRIPTION OF THE PREFERRED EMBODIMENTS

A first preferred exhaust gas cleaner of the present invention is constituted by a catalyst comprising a porous inorganic oxide supporting 0.2-15 weight % of at least one Ag component selected from the group consisting of Ag and Ag compounds, the porous inorganic oxide being an alumina-based composite oxide comprising alumina and at least one oxide selected from the group consisting of silica, titania and zirconia.

In the present specification and claims, the weight percentages of the catalytically active components are expressed by metal basis.

A second preferred exhaust gas cleaner of the present invention is constituted by a catalyst comprising a porous inorganic oxide supporting (a) 0.2-15 weight % of at least one Ag component selected from the group consisting of Ag and Ag compounds and (b) 5 weight % or less of at least one transition metal component selected from the group consisting of W, V, Mn, Mo, Nb and Ta, the porous inorganic oxide being an alumina-based composite oxide comprising alumina and at least one oxide selected from the group consisting of silica, titania and zirconia.

A third preferred exhaust gas cleaner of the present invention is constituted by (1) a first catalyst comprising a first porous inorganic oxide supporting 0.2-15 weight % of at least one Ag component selected from the group consisting of Ag and Ag compounds, the first porous inorganic oxide being an alumina-based composite oxide comprising alumina and at least one oxide selected from the group consisting of silica, titania and zirconia, and (2) a second catalyst comprising a second porous inorganic oxide supporting 0.1-5 weight % of at least one Pt component selected from the group consisting of Pt, Pd, Ru, Rh, Ir and Au, the second inorganic oxide being alumina, titania, zirconia, or composite oxides thereof.

A fourth preferred exhaust gas cleaner of the present invention is constituted by (1) a first catalyst comprising a first porous inorganic oxide supporting 0.2-15 weight % of at least one Ag component selected from the group consisting of Ag and Ag compounds, the first porous inorganic oxide being an alumina-based composite oxide comprising alumina and at least one oxide selected from the group consisting of silica, titania and zirconia, and (2) a second catalyst comprising a second porous inorganic oxide supporting 0.5-30 weight % of at least one transition metal component selected from the group consisting of W, V and Mo, the second inorganic oxide being titania or a titania-based composite oxide comprising titania and at least one oxide selected from the group consisting of alumina, silica and zirconia.

A fifth preferred exhaust gas cleaner of the present invention is constituted by (1) a first catalyst comprising a first porous inorganic oxide supporting 0.2-15 weight % of at least one Ag component selected from the group consisting of Ag and Ag compounds, the first porous inorganic oxide being <u>alumina</u> or an alumina-based composite oxide comprising alumina and at least one oxide selected from the group consisting of silica, titania and zirconia, and (2) a second catalyst which is a mixture of a transition metal catalyst comprising a second porous inorganic oxide supporting 0.5-30 weight % of at least one transition metal component selected from the group consisting of W, V and Mo and a Pt catalyst comprising a third porous inorganic oxide supporting 5 weight % or less of at least one Pt component selected from the group consisting of Pt, Pd, Ru, Rh, Ir and Au, the second porous inorganic oxide being titania or a titania-based composite oxide comprising titania and at least one oxide selected from the group consisting of alumina, silica and zirconia, and the third porous inorganic oxide being alumina, titania, zirconia, silica, zeolite or a composite oxide thereof.

The exhaust gas cleaner of the present invention may be basically in two forms.

The exhaust gas cleaner of a first preferred form is obtained by coating on a cleaner substrate the first and <u>optional second catalyst</u> each comprising a powdery porous inorganic oxide carrying one or more catalytically active components. The exhaust gas cleaner of such a form may be also obtained by carrying the catalytically active components onto a porous inorganic oxide powder coated on a cleaner substrate. Preferable materials for the cleaner substrate include porous, heat-resistant ceramics having a large specific surface area such as γ-alumina, titania, zirconia and their composite oxides such as γ-alumina-titania, γ-alumina-silica, γ-alumina-zirconia, titania-zirconia, etc. When a high heat resistance is required, cordierite, mullite, alumina or its composite oxides are preferable. Also, the cleaner substrate may be formed from a known metal material.

The shape and size of the cleaner substrate may be changed depending on applications. Practically, the cleaner substrate may be fabricated from two parts or more such as an inlet portion, an intermediate portion, an outlet portion, etc. The cleaner substrate may be of a three-dimensional structure such as a honeycomb, a foam, a refractory fiber assembly, etc. Further, the cleaner substrate may be of granules or pellets. The first and optional second catalysts may be coated on different portions of one cleaner substrate. Alternatively, the first and optional second catalysts may be coated on separate cleaner substrates, and thereafter, fabricated into an exhaust gas cleaner.

The exhaust gas cleaner of a second preferred form may be produced by charging into a suitable reactor such as a catalytic converter, which is equipped with at least inlet and outlet portions, the first and optional second catalysts obtained by carrying one or more catalytically active components on a pelletized, granular or powdery porous inorganic oxide, or obtained by forming a porous inorganic oxide carrying one or more catalytically active components into pellet, granule or powder.

The exhaust gas cleaner of the present invention is constituted by the following first catalyst and optionally a second catalyst.

[A] First Catalyst

The first catalyst comprises a porous inorganic oxide supporting an Ag component of Ag, Ag compound or a mixture thereof. The first catalyst may further contain optional transition metal component of at least one component selected form the group consisting of W, V, Mn, Mo, Nb ant Ta, when the exhaust gas cleaner is constituted by the first catalyst alone. The first catalyst is disposed on an inlet side of the exhaust gas cleaner when used in combination with the second catalyst.

[A-1] Porous inorganic oxide

Preferable materials for the porous inorganic oxide for the first catalyst include porous alumina-based composite oxides comprising alumina and at least one oxide selected from the group consisting of silica, titania and zirconia. A composite oxide comprising alumina and silica is particularly preferable. The alumina-based composite oxides promote the reaction of the nitrogen oxides with the reducing agent such as hydrocarbons and oxygen-containing organic compound or a fuel containing the reducing agent. Also, the alumina-based composite oxides can improve the durability and heat resistance of the exhaust gas cleaner even in the presence of $SO_2$, because sintering of the catalytically active components supported thereon can be effectively prevented even at a high temperature of 700°C thereby avoiding the reduction of the effective surface area of the catalytically active components.

As the alumina-base composite oxide, commercially available one or those prepared by mixing a inorganic oxide sol such as silica sol, etc. with alumina or prepared by known sol-gel method may be used.

When the first catalyst is used in combination with a mixed catalyst of the transition metal catalyst and the Pt catalyst, alumina alone may be preferably used as the porous inorganic oxide.

The content of the oxides other than alumina in the alumina-based composite oxides is preferred to be 50 weight % or less, preferably 0.1-50 weight %, and more preferably 0.1-40 weight %. When the content of the oxides other than alumina is lower than 0.1 weight %, the NOx removal ratio comes to be reduced during cleaning operation of a long period of time when the exhaust gas contains sulfur dioxides. A content higher than 50 weight % results in a deteriorated initial efficiency of nitrogen oxides removal.

Specific surface area of the porous inorganic oxide for the first catalyst are preferably 10 m²/g or more, more preferably 30 m²/g or more, further preferably 80 m²/g or more, and particularly preferably 100 m²/g or more. When the specific surface area is smaller than 10 m²/g, the catalytically active component supported on the porous inorganic oxide does not come into contact with the exhaust gas in a large contact area, failing to remove nitrogen oxides efficiently.

[A-2] Ag component

The Ag component is at least one of Ag and Ag compounds. The Ag compounds may include oxides of Ag, halides of Ag, sulfates of Ag and phosphates of Ag. Preferred Ag component is Ag, oxides of Ag, AgCl and $Ag_2SO_4$, and Ag, oxides of Ag and AgCl are more preferable.

The amount of the Ag component supported on a porous inorganic oxide is 0.2-15 weight %, preferably 0.5-12 weight %, and more preferably 0.5-10 weight % (on a metal basis) based on the porous inorganic oxide. When the amount of the Ag component is less than 0.2 weight %, the removal ratio of the nitrogen oxides is low. On the other hand, the amount of the Ag component exceeding 15 weight % makes no further improvement in the NOx removal ratio because of the predominant burning of hydrocarbons and/or oxygen-containing organic compounds.

The average diameter, determined arithmetically, of the Ag component supported on a porous inorganic oxide after calcination is preferably 10-1000 nm and more preferably 10-200 nm. Generally the smaller the average diameter of the Ag component supported on a porous inorganic oxide, the higher the activity of the first catalyst. However, when the average diameter of the Ag component is less than 10 nm, the reducing agent (hydrocarbons and/or oxygen-containing organic compounds) is likely to be predominantly oxidized, resulting in a decrease in the removal ratio of the nitrogen oxides. On the other hand, when the average diameter is larger than 1000 nm, the catalytic activity of the Ag component becomes low, resulting in a low removal ratio of the nitrogen oxides.

[A-3] Transition metal component

The transition metal component for the first catalyst may include V, W, Mn, Mo, Nb and Ta, and preferred elements are V, W, Mn and Mo. In particular, Mo is preferred. These transition metal components may exist on the porous inorganic oxide as catalytically active metals or oxides.

The amount of the transition metal component supported on the first porous inorganic oxide is 15 weight % or less, preferably 0.05-15 weight %, and more preferably 0.1-10 weight % (on a metal basis) based on the first porous inorganic oxide. The amount of the transition metal component more than 5 weight % compensates the effect of the Ag component remarkably. The coexistence of the transition metal component together with the Ag component in the first catalyst can improve the NOx removal efficiency at a lower temperature.

[A-4] Preparation of the first catalyst

The first catalyst is prepared by carrying the Ag component and optionally the transition metal component on the porous inorganic oxide described in [A-1] by known methods such as an impregnation method, a precipitation method, etc.

Ag including Ag oxides may be carried by immersing the porous inorganic oxide into an aqueous solution of silver nitrate, etc., drying at about 50-150°C, preferably at about 70°C, and then subjecting the dried material to calcination by heating it stepwise from about 70°C to about 700°C in air, oxygen or nitrogen atmosphere or hydrogen gas stream or under evacuating. When the calcination is conducted in nitrogen atmosphere or in hydrogen gas stream, the calcined product is preferred to be subjected to oxidation treatment, preferably in the presence of nitrogen oxides, in an oxidizing gas stream such as oxygen gas stream at 700°C or below.

Silver sulfate may be carried, for example, by immersing the porous inorganic oxide in a solution of silver sulfate in aqueous nitric acid, and then followed by the same drying and calcination steps as described above.

Silver phosphate may be carried, for example, by immersing the porous inorganic oxide in an aqueous solution of silver nitrate while adding little by little phosphoric acid or ammonium phosphate under stirring. The mixture is further stirred for 4 hours while shielding the light. After drying, the resulting porous inorganic oxide is calcined at 120°C for one hour, 450°C for 3 hours, and 600°C for 3 hours to obtain a porous inorganic oxide carrying silver phosphate.

When silver halide is to be carried, the porous inorganic oxide impregnated with an aqueous solution of silver nitrate, etc. is further immersed in an aqueous solution of ammonium halide to convert the silver nitrate into silver halide precipitation, and then followed by the same drying and calcination steps as described above.

When the transition metal component is further carried, the inorganic oxide carrying Ag component is immersed in an aqueous solution of an ammonium tungstate, vanadate, molybdate, etc. in the presence of oxalic acid, etc., then followed by drying and calcination steps as described above.

[B] Second Catalyst

The second catalyst may be used optionally and comprises a Pt catalyst comprising a porous inorganic oxide supporting a Pt component, a transition metal catalyst comprising a porous inorganic oxide supporting a transition metal component, or a mixture of the Pt catalyst and the transition metal catalyst. The second catalyst is disposed at the outlet side of the exhaust gas cleaner.

[B-1] Porous inorganic oxide for Pt component

Preferred porous inorganic oxide for the Pt component may include porous and heat-resistant ceramics of γ-alumina, zirconia, titania, silica, zeolite and composite oxides thereof such as γ-alumina-titania, γ-alumina-silica, γ-alumina-zirconia, titania-zirconia, etc. More preferred material is γ-alumina, titania, zirconia or composite oxides thereof, and particularly preferred material is γ-alumina, titania or γ-alumina-titania composite oxide. The specific surface area is, like the porous inorganic oxide for the first catalyst, preferably 10 m$^2$/g or more.

[B-2] Porous inorganic oxide for transition metal component

Preferred porous inorganic oxide for the transition metal component may include titania and a titania-based composite oxide containing at least one of other porous inorganic oxides such as alumina, silica and zirconia. In the titania-based composite oxide, the content of the oxides other than titania is 0.1-50 weight % and preferably 0.1-40 weight %.

[B-3] Pt component

The Pt component is one or more of Pt, Pd, Ru, Rh, Ir and Au. When the Pt catalyst is used alone as the second catalyst, the combined use of Pt and Rh, Pd and Rh, or Pt, Pd and Rh is effective. When the Pt catalyst is used together with the transition metal catalyst described below, one or more of Pt, Pd, Ru, Rh and Au is preferable, and one or more of Pt, Pd and Au is more preferable. The Pt component may exist on the porous inorganic oxide as catalytically active metal or oxides.

The amount of the Pt component supported on the porous inorganic oxide is 0.01-5 weight %, and preferably 0.01-4 weight % (on a metal basis) based on the porous inorganic oxide. The amount of the Pt component more than 5 weight % results in predominant burning of hydrocarbons and/or oxygen-containing organic compound to deteriorate the removal efficiency. The amount of the Pt component less than 0.01 weight % show no sufficient effect of addition.

The Pt catalyst may further carry 10 weight % or less of at least one element selected form the group consisting of alkali elements, alkaline earth elements and rare earth elements in view of enhancing the heat resistance of the Pt catalyst.

[B-4] Transition metal component

The transition metal component for the second catalyst is one or more of W, V and Mo, and preferably W and/or V. The transition metal component may include oxides of such elements. The transition metal component catalyzes the reduction of the nitrogen oxides by ammonia to increase the NOx removal ratio. The transition metal component may exist on the porous inorganic oxide as catalytically active metal or oxides.

The amount of the transition metal component supported on the porous inorganic oxide is 0.5-30 weight %, and preferably 1-20 weight % (on a metal basis) based on the porous inorganic oxide. The amount of the transition metal component more than 30 weight % gives no additional effect in improving the removal ratio of the nitrogen oxides. On the other hand, the amount less than 0.5 weight % results in a poor NOx removal ratio.

[B-5] Preparation of Pt catalyst

The Pt component may be carried by the porous inorganic oxide described above by known methods such as an impregnation method, a precipitation method, etc. For example, the porous inorganic oxide is immersed in a solution containing the Pt component, such as aqueous solution of chloroplatinic acid, chloroauric acid, palladium chloride, etc., and subjected to the same drying and calcination steps as in the preparation of the first catalyst.

[B-6] Preparation of transition metal catalyst

The transition metal component may be carried by the porous inorganic oxide described above by known methods such as an impregnation method, a precipitation method, etc. For example, the porous inorganic oxide is immersed in a solution containing the transition metal component such as an aqueous solution of an ammonium tungstate, ammonium vanadate and ammonium molybdate in the presence of oxalic acid, and subjected to the same drying and calcination steps as in the preparation of the first catalyst.

The transition metal catalyst also may be prepared by carrying the transition metal component on methatitanic acid (hydrous titanium oxide) in stead of titania, etc.

[C] Preparation of the exhaust gas cleaner The first catalysts may be coated on the cleaner substrate as described above by known methods such as a wash-coating method, a sol-gel method, a powder method, etc. The thickness of the first catalyst coated on the cleaner substrate is preferably up to 300 μm, though it is usually restricted by the difference in a thermal expansion coefficients between the first catalyst and the cleaner substrate. With such thickness, it is possible to prevent the cleaner from being broken by a thermal shock, etc. during NOx-removing operations.

The second catalyst (Pt catalyst, transition metal catalyst and mixed catalyst thereof) optionally used may also be carried by the cleaner substrate in the same manner as described above.

In the mixed catalyst, the mixing ratio by weight of the transition metal catalyst to the Pt catalyst is preferably 2:1 to 100:1 and more preferably 5:1 to 80:1. When the mixing ratio exceeds 100:1 (when the percentage of the Pt catalyst is too small), the NOx removal ratio comes to be reduced in a wide temperature range of 150-600°C. On the other hand, when the mixing ratio is lower than 2:1 (when the percentage of the Pt catalyst is too large), the removal ratios of hydrocarbons and CO is reduced. By using the mixed catalyst, the reduction by the transition metal catalyst and the oxidation by the Pt catalyst proceed simultaneously and independently from each other to increase the removal ratios of NOx, etc.

The transition component of the second catalyst may directly supported on the cleaner substrate when it is composed of the porous inorganic oxide as defined in [B-2]. Further, the porous inorganic oxide as defined in [B-2] carrying the transition component may be formed into a three-dimensional structure such as a honeycomb, etc.

The amount of the first catalyst or the second catalyst coated onto a surface of the cleaner substrate is preferably 20-300 g/liter, more preferably 50-250 g/liter based on the cleaner substrate. When the amount of the first catalyst is less than 20 g/liter, a sufficient removal ratio of the nitrogen oxides cannot be achieved. On the other hand, an amount more than 300 g/liter gives no detectable increase in removal efficiency, but results in a higher loss of pressure.

The weight ratio of the first catalyst to the second catalyst (Pt catalyst, transition metal catalyst, or a mixture thereof) is 10:1 to 1:5, preferably 5:1 to 1:4. When the weight ratio is less than 1:5 (when the percentage of the first catalyst is too small), a sufficiently high removal ratio of the nitrogen oxides cannot be achieved in a wide temperature range of 150-600°C. On the other hand, when the weight ratio is higher than 10:1 (when the percentage of the first catalyst is too large), the removal of hydrocarbons and carbon monoxide is low because of insufficient reaction between the reducing agent including ammonia formed on the first catalyst and NOx at relatively low temperature.

[D] Method for cleaning exhaust gas

The exhaust gas cleaner is disposed in a flow path of the exhaust gas. In case of the exhaust gas cleaner comprising the first and second catalyst, the first catalyst and the second catalyst are disposed at the inlet side and the outlet side, respectively.

[D-1] Reducing agent The exhaust gas usually contains residual hydrocarbons such as ethylene, propylene, etc. to some extent. Since the exhaust gas generally does not contain sufficient amounts of residual hydrocarbons to reduce all nitrogen oxides in the exhaust gas, at least one reducing agent should be introduced into the exhaust gas. A site for introducing the reducing agent is an upstream side of the exhaust gas cleaner.

The reducing agent to be added to exhaust gas includes hydrocarbons and oxygen-containing organic compounds having at least two carbon atoms. A fuel containing such reducing agent may be also used.

The hydrocarbons used as the reducing agent include alkanes, alkenes and alkynes which may be gaseous or liquid in the normal state (25°C, 1 atm). The gaseous hydrocarbons may be alkanes, alkenes or alkynes each having 2 or more carbon atoms, such as propane, propylene, acetylene, etc. The liquid hydrocarbons may be heptane, cetane, kerosene, diesel oil, light oil, gasoline, heavy oil, etc. The liquid hydrocarbons having a boiling point of 50-350°C are preferable.

In case of an exhaust gas discharged from engines operated by using a mixed fuel of liquefied petroleum gas, town gas or liquefied natural gas, a hydrocarbon or a mixed hydrocarbon may be preferably added into the exhaust gas as the reducing agent. The hydrocarbon may include alkanes, alkenes and alkynes such as methane, ethane, propane, butane, etc. The mixed hydrocarbon may include liquefied petroleum gas, town gas and liquefied natural gas. Other mixed hydrocarbons may also be used. Such hydrocarbon or mixed hydrocarbon improve the NOx removal ratio in a high temperature range of the exhaust gas. Since a mixed hydrocarbon mainly comprising saturated hydrocarbons of small carbon number decreases the NOx removal ratio at a low temperature, a mixed hydrocarbon added with a hydrocarbon of high carbon number is preferred to be used.

The oxygen-containing organic compound having at least two carbon atoms may include alcohols, ketones, aldehydes, carboxylic acids, ethers, esters, etc. As the alcohol, monohydric aliphatic alcohol having two or more carbon atoms may be exemplified. Of such alcohols, those of relatively low molecular weight, such as ethanol, n-propyl alcohol, isopropyl alcohol, etc., are preferable. The reduction of NOx is insufficient when methanol is used. Preferred ketone, aldehyde and carboxylic acid are acetone, acetaldehyde, acetic acid.

The weight ratio of the reducing agent/nitrogen oxides is preferably 0.1-5. When the weight ratio is less than 0.1, the removal ratio of nitrogen oxides is not improved. On the other hand, when the weight ratio is more than 5, fuel efficiency is low.

The fuel to be introduce into the exhaust gas together with the reducing agent may be gasoline, light oil, kerosene, etc. The fuel containing the reducing agent may be introduced in an amount such that the weight ratio of the reducing agent/nitrogen oxides in the exhaust gas is 0.1-5.

[D-2] Contact time

The contact time between the exhaust gas and the exhaust gas cleaner is preferably 0.006 g·sec/ml or more, and more preferably 0.007 g·sec/ml or more. When the contact time is less than 0.006 g·sec/ml, the reduction of NOx is insufficient to result in a low NOx removal ratio.

[D-3] Apparent space velocity

To efficiently proceed the reduction of the nitrogen oxides with the oxygen-containing organic compounds or hydrocarbons, the apparent space velocity of the exhaust gas passing through the first catalyst is 150,000 h$^{-1}$ or less, preferably 100,000 h$^{-1}$ or less. An apparent space velocity of the first catalyst exceeding 150,000 h$^{-1}$ causes insufficient reduction of the nitrogen oxides to result in poor removal ratio of the nitrogen oxides.

The apparent space velocity of the exhaust gas passing through the second catalyst (the Pt catalyst or the transition metal catalyst) is 200,000 h$^{-1}$ or less, preferably 150,000 h$^{-1}$ or less. An apparent space velocity exceeding 200,000 h$^{-1}$ causes insufficient reduction of the nitrogen oxides to result in poor removal ratio of the nitrogen oxides.

The apparent space velocity of the exhaust gas passing through the second catalyst (the mixed catalyst of the Pt catalyst and the transition metal catalyst) is 150,000 h$^{-1}$ or less, preferably 100,000 h$^{-1}$ or less. An apparent space velocity exceeding 150,000 h$^{-1}$ causes insufficient removal of hydrocarbons and carbon monoxide.

[D-4] Exhaust gas temperature

The exhaust gas passing through the exhaust gas cleaner where the reducing agent is reacted with the nitrogen oxides is kept at 150-650°C, preferably 200-600°C and more preferably 300-550°C. When the temperature of the exhaust gas is lower than 150°C, a reduction of the nitrogen oxides by the reducing agent cannot be sufficiently carried out. On the other hand, when the temperature of the exhaust gas is higher than 650°C, the reducing agent is burned before reacts with the nitrogen oxides, failing to reduce the nitrogen oxides effectively.

The present invention will be described in further detail by way of the following Examples. Incidentally, the catalytic active components are generally expressed by metals themselves for simplicity in Examples. In the following Examples, the weight percentages of the catalytically active components are expressed by metal basis.

## Example 1

10 g of commercially available silica-alumina powder (SiO$_2$ content: 5 weight %, specific surface area: 350 m$^2$/g) was immersed in an aqueous solution of silver nitrate to carry 5 weight % of Ag. The resulting powder was then formed into pellets (diameter: 0.5-1 mm, length: 2-3 mm), dried and calcined in air by stepwise-heating to 600°C to prepare an Ag catalyst.

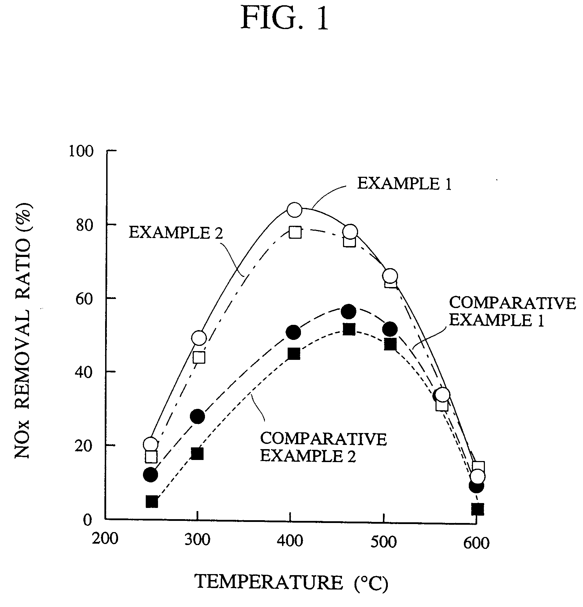

An exhaust gas cleaner was prepared by charging 1.5 g of the catalyst into a reactor pipe. Next, a test gas having the composition shown in Table 1 was caused to pass through the reactor pipe at a rate of 1.8 liters per minute (the normal state: 25°C, 1 atm) while maintaining the temperature of the exhaust gas in the reactor pipe at each temperature shown in Fig. 1. The contact time was about 0.05 g·sec/ml.

Table 1

| Component | Concentration |
|---|---|
| Nitrogen monoxide | 800 ppm (dry basis) |
| Oxygen | 10 volume % (dry basis) |
| Ethanol | 1250 ppm (dry basis) |
| | Three times the weight of nitrogen monoxide (dry basis) |
| Sulfur dioxide | 80 ppm (dry basis) |
| Nitrogen | Balance |
| Water | 10 volume % of the total volume of the above components |

The concentration of nitrogen oxides (NO + NO$_2$) in the test gas after passing through the exhaust gas cleaner was measured by a chemiluminescence analyzer to determine the removal ratio of nitrogen oxides. The removal ratio was calculated from the equation: (initial concentration - concentration after passing)/(initial concentration) x 100. The results are shown in Fig. 1.

### Example 2

The same exhaust gas cleaner as prepared in Example 1 was exposed to a test gas having the same composition as shown in Table 1 except for containing no ethanol at 450°C for 200 hours. Then, the same test as in Example 1 was conducted on the exhaust gas cleaner thus treated. The results are shown in Fig. 1.

### Comparative Example 1

The same preparation procedure as in Example 1 was repeated except for using 1.5 g of commercial available $\gamma$-alumina powder (specific surface area: 260 $m^2/g$) in stead of the silica-alumina powder to obtain an Ag catalyst comprising $\gamma$-alumina carrying 5 weight % of Ag (pellet).

An exhaust gas cleaner prepared by the same manner as in Example 1 was subjected to the same exposing treatment as in Example 2. Then, the same test as in Example 1 was repeated. The results are shown in Fig. 1.

### Comparative Example 2

The same preparation procedure as in Example 1 was repeated except for using 1.5 g of commercially available silica-alumina powder ($SiO_2$ content: 60 weight %, specific surface area: 490 $m^2/g$) as the porous inorganic oxide to obtain an Ag catalyst carrying 5 weight % of Ag (pellet).

An exhaust gas cleaner was prepared and subjected to the test in the same manner as in Example 1. The results are shown in Fig. 1.

As seen from Fig. 1, Examples 1 and 2 showed sufficient NOx removal ratios in a wide exhaust gas temperature range of 250-600°C. In particular, the exhaust gas of the present invention showed no drastic decrease in the NOx removal ratio even after exposed to a gas containing sulfur dioxide for a long time (Example 2). On the other hand, comparing with Examples 1 and 2, the exhaust gas cleaner of $\gamma$-alumina (Comparative Example 1) or silica-alumina having an alumina content outside the claimed range (Comparative Example 2) showed a lower NOx removal ratio throughout the temperature range of 250-600°C.

### Example 3

10 g of commercially available silica-alumina powder ($SiO_2$ content: 5 weight %, specific surface area: 350 $m^2/g$) was immersed in an aqueous solution of silver nitrate to carry 5 weight % of Ag. The resulting powder was then dried and calcined in air by stepwise-heating to 600°C. The resultant powder was further immersed in an aqueous solution of ammonium molybdate and oxalic acid in water to carry 0.6 weight % of Mo, dried at 70°C, formed into pellets (diameter: 0.5-1 mm, length: 2-3 mm), and calcined in air by stepwise-heating to 600°C to prepare a catalyst (Ag/Mo).

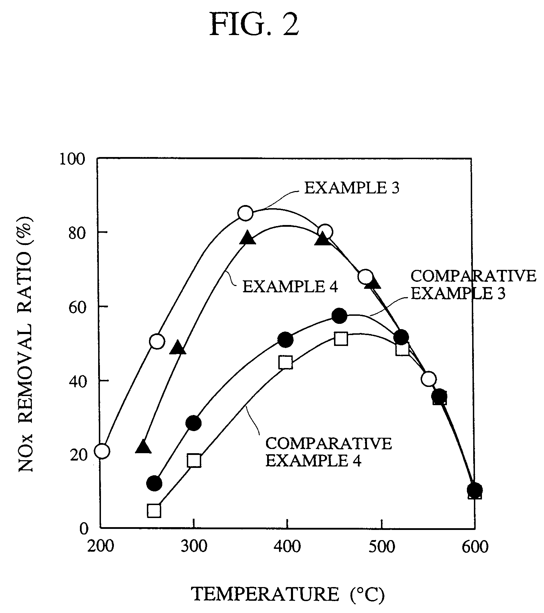

According to the same procedures as in Example 1, an exhaust gas cleaner was prepared and subjected to the exhaust gas cleaning test. The results are shown in Fig. 2.

### Example 4

By using the exhaust gas cleaner prepared in Example 3, the same exposing treatment and the same exhaust gas cleaning test as in Example 2 were repeated. The results are shown in Fig. 2.

### Comparative Example 3 and 4

The same preparation procedure and exhaust gas cleaning test as in Comparative Examples 1 and 2 were repeated.

The results are shown in Fig. 2.

As seen from Fig. 2, Examples 3 and 4 showed high NOx removal ratios in a wide exhaust gas temperature range of 200-600°C. In particular, the exhaust gas of the present invention showed no drastic decrease in the NOx removal ratio even after exposed to a gas containing sulfur dioxide for a long time (Example 4). On the other hand, comparing with Examples 3 and 4, the exhaust gas cleaner of $\gamma$-alumina (Comparative Example 3) or silica-alumina having an alumina content outside the claimed range (Comparative Example 4) showed a lower NOx removal ratio throughout the temperature range of 200-600°C.

### Example 4a

The procedure of Example 3 was repeated by immersing silica-alumina powder in an aqueous solution of silver nitrate and manganese acetate to obtain pellets carrying 3 weight % of Ag and 5 weight % of Mn.

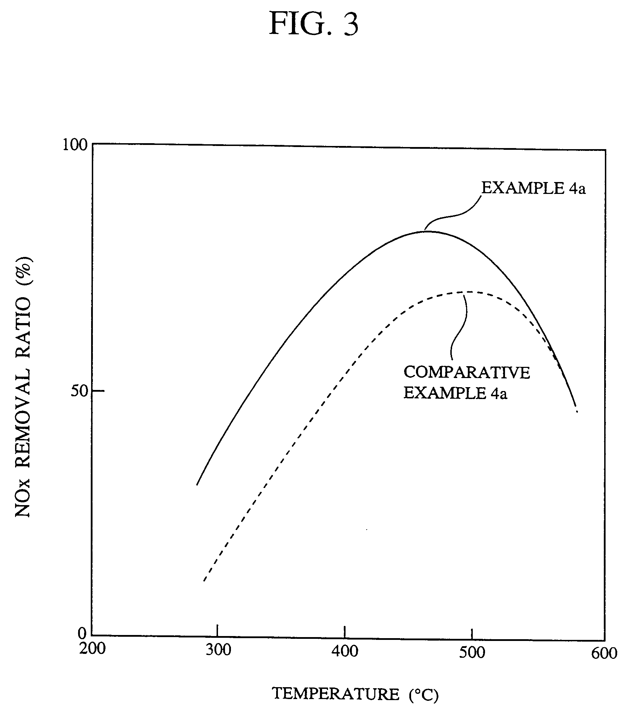

The same test as in Example 1 was conducted on the pellets thus obtained except for using a test gas having the composition of Table la. The results are shown in Fig. 3.

Table 1a

| Component | Concentration |
|---|---|
| Nitrogen monoxide | 800 ppm (dry basis) |
| Oxygen | 10 volume % (dry basis) |
| Propylene | 1250 ppm (dry basis) |
| | Three times the weight of nitrogen monoxide (dry basis) |
| Nitrogen | Balance |
| Water | 10 volume % of the total volume of the above components |

### Comparative Example 4a

The same catalyst as in Comparative Example 1 was subjected to the exhaust gas cleaning test in the same manner as in Example 4a.

The results are shown in Fig. 3.

### Example 5

In the same manner as in Example 1, pellets (diameter: 1.5 mm, length: 2-3 mm) comprising a silica-alumina carrying 4 weight % of Ag were prepared (first catalyst carrying Ag).

Separately, a Pt catalyst comprising 2 g of alumina-titania composite oxide (titania content: 75 weight %) carrying 0.5 weight % of Pt was prepared by immersing the composite oxide in an aqueous solution of chloroplatinic acid, drying and then calcining the resulting composite oxide by stepwise-heating to 700°C (second catalyst carrying Pt).

An exhaust gas cleaner was obtained by charging into a reactor pipe 3.6 g of the first catalyst on the inlet side and 1.8 g of the second catalyst on the outlet side. Then, after the test gas having the composition shown in Table 2 was passed through the exhaust gas cleaner at a rate of 4.4 liters per minute (the normal state) at 450°C for 100 hours (apparent space velocity: about 30,000 $h^{-1}$ at the first catalyst and about 100,000 $h^{-1}$ at the second catalyst), the removal efficiency of the exhaust gas cleaner was evaluated at a respective temperature shown in Table 3.

Table 2

| Component | Concentration |
|---|---|
| Nitrogen monoxide | 800 ppm (dry basis) |
| Carbon monoxide | 100 ppm (dry basis) |
| Oxygen | 10 volume % (dry basis) |
| Ethanol | 1250 ppm (dry basis) |
| | three times the weight of nitrogen monoxide (dry basis) |
| Propylene | 100 ppm (dry basis) |
| Sulfur dioxide | 80 ppm (dry basis) |
| Nitrogen | Balance |
| Water | 10 volume % of the total volume of the above components |

The concentration of nitrogen oxides was measured in the same manner as in Example 1. Further, the concentrations of carbon monoxide and hydrocarbons were measured by a CO-meter and HC-meter while using a test gas containing no ethanol. The results are shown in Table 3.

<u>Example 6</u>

In the same manner as in Example 1 except for successively immersing a silica-alumina powder ($SiO_2$ content: 5 weight %, specific surface area: 200 m²/g) in an aqueous solution of silver nitrate and an aqueous solution of ammonium chloride, a powdery catalyst carrying 4 weight % of AgCl was prepared. 1.0 g (dry basis) of the catalyst thus obtained was coated on a commercially available honeycomb-type cordierite filter (diameter: 30 mm, length: 12.5 mm, 400 cells/in²), dried and then calcined by stepwise-heating to 600°C to prepare first cleaner part coated with the first catalyst (AgCl). The particles of AgCl carried had an average particle size of 50 nm.

Separately, alumina-titania powder carrying 0.5 weight % of Pt prepared in the same manner as in Example 5 was made into a slurry. 0.4 g (dry basis) of the slurry was coated on a commercially available honeycomb-type cordierite filter (diameter: 30 mm, length: 4.2 mm, 400 cells/in²), dried and then calcined by stepwise-heating to 700°C to prepare a second cleaner part coated with the second catalyst (Pt).

With the first cleaner part on the inlet side and the second cleaner part on the outlet side, the two cleaner parts were combined and charged in a reactor pipe to prepare an exhaust gas cleaner. Then, the same test as in Example 5 was conducted (apparent space velocity: about 30,000 $h^{-1}$ at the first catalyst and about 90,000 $h^{-1}$ at the second catalyst). The results are shown in Table 3.

<u>Example 7</u>

A second cleaner part coated with the second catalyst (Pt) was prepared in the same manner as in Example 6 except for using a titania powder (specific surface area: 50 m²/g) carrying 0.5 weight % of Pt.

With the first cleaner part of Example 6 on the inlet side and the second cleaner part obtained above on the outlet side, the two cleaner parts were combined and charged in a reactor pipe to prepare an exhaust gas cleaner. Then, the same test as in Example 5 was conducted (apparent space velocity: about 30,000 $h^{-1}$ at the first catalyst and about 90,000 $h^{-1}$ at the second catalyst). The results are shown in Table 3.

<u>Comparative Example 5</u>

Pellets carrying 4 weight % of Ag were prepared in the same manner as in Example 1 except for using silica-alumina composite oxide ($SiO_2$ content: 80 weight %, specific surface area: 490 m²/g).

An exhaust gas cleaner prepared by charging into a reactor pipe 3.6 g of the pellets was subjected to the same test as in Example 5 (apparent space velocity: 30,000 $h^{-1}$). The results are shown in Table 3.

**Comparative Example 6**

Pellets carrying 4 weight % of Ag were prepared in the same manner as in Example 1 except for using γ-alumina (specific surface area: 260 m2/g).

An exhaust gas cleaner prepared by charging into a reactor pipe 3.6 g of the pellets was subjected to the same test as in Example 5 (apparent space velocity: 30,000 h⁻¹). The results are shown in Table 3.

## Table 3

### Removal Ratios of Nitrogen Oxides (NOx), Carbon Monoxide (CO) and Hydrocarbons (HC)

| Temp. (°C) | Removed Components | Removal Ratio (%) | | | | |
|---|---|---|---|---|---|---|
| | | Ex. 5 | Ex. 6 | Ex. 7 | Com. Ex. 5 | Com. Ex. 6 |
| 250 | NOx | 15 | 12 | 12 | 10 | 6 |
| | CO | 75 | 70 | 68 | 14 | 12 |
| | HC | 50 | 45 | 45 | 10 | 10 |
| 300 | NOx | 45 | 42 | 42 | 26 | 20 |
| | CO | 87 | 82 | 83 | 40 | 35 |
| | HC | 63 | 62 | 62 | 30 | 30 |
| 350 | NOx | 62 | 58 | 57 | 42 | 30 |
| | CO | 92 | 90 | 90 | 60 | 56 |
| | HC | 65 | 61 | 60 | 30 | 28 |
| 400 | NOx | 83 | 75 | 73 | 52 | 44 |
| | CO | 98 | 93 | 91 | 65 | 60 |
| | HC | 89 | 82 | 81 | 40 | 38 |
| 450 | NOx | 78 | 74 | 74 | 60 | 57 |
| | CO | 100 | 100 | 100 | 70 | 65 |
| | HC | 93 | 91 | 91 | 61 | 57 |
| 500 | NOx | 65 | 68 | 68 | 50 | 48 |
| | CO | 100 | 100 | 100 | 78 | 75 |
| | HC | 100 | 100 | 100 | 70 | 70 |

| 5 5 0 | N Ox | 3 5 | 3 9 | 3 9 | 3 6 | 3 6 |
| | CO | 1 0 0 | 1 0 0 | 1 0 0 | 8 9 | 8 8 |
| | HC | 1 0 0 | 1 0 0 | 1 0 0 | 8 3 | 8 1 |
| 6 0 0 | N Ox | 2 7 | 3 3 | 3 3 | 2 0 | 2 0 |
| | CO | 1 0 0 | 1 0 0 | 1 0 0 | 9 8 | 9 8 |
| | HC | 1 0 0 | 1 0 0 | 1 0 0 | 9 0 | 9 0 |

As is clear from Table 3, the exhaust gas cleaners of Examples 5-7 showed high removal ratios of nitrogen oxides, carbon monoxide and hydrocarbons in a wide temperature range of the exhaust gas. The removal ratio of hydrocarbons and carbon monoxide was high even at the lower temperature range. On the other hand, the exhaust gas cleaners of Comparative Examples 5 and 6 were effective for removal of nitrogen oxides in only a narrow temperature range of the exhaust gas, and showed poor removal ratios of carbon monoxide and hydrocarbons.

### Example 8

A first catalyst (pellets of 1.5 mm diameter and 2-3 mm length) comprising silica-alumina carrying 4 weight % of Ag was prepared in the same manner as in Example 1.

Separately, 10 g of titania (average particle size: 0.5-2.0 mm, specific surface area: 35 m²/g) were immersed in an aqueous solution prepared by heating over a water bath a mixture of 1.8 g of ammonium tungustate para-pentahydrate, 1.0 g of oxalic acid and 6.2 ml of water for 30 minutes. The titania thus treated was dried in an air at 80°C for 2 hours, at 100°C for 2 hours and then at 120°C for 2 hours. The dried titania was then heated from 120°C to 500°C in a nitrogen stream containing 20 % of oxygen over 5 hours and calcined at 500°C for 4 hours to prepare a second catalyst carrying 9 weight % of W.

An exhaust gas cleaner obtained by charging into a reactor tube 3.6 g of the first catalyst on the inlet side and 3.6 g of the second catalyst on the outlet side was subjected to the evaluation of the removal efficiency at each exhaust gas temperature shown in Table 4 after passing the test gas of Table 1 through the exhaust gas cleaner at a rate of 4.4 liters per minute (the normal state) at 450°C for 100 hours (apparent space velocity: about 30,000 h⁻¹ at the first catalyst and about 30,000 h⁻¹ at the second catalyst). The results are shown in Table 4.

### Example 9

A first cleaner part (honeycomb-type cordierite filter) coated with a first catalyst comprising silica-alumina carrying 4 weight % of AgCl was prepared in the same manner as in Example 6.

Separately, a suspension of 20 g of $V_2O_5$ in 30 ml water maintained at about 90°C over a water bath was stirred for 1 hour to obtain a solution. After cooling, the solution was diluted with water to 80 ml. 4 ml of the solution was further diluted with 2.8 ml water and 10 g of titania powder (specific surface area: 50 m²/g) were immersed therein for 30 minutes to obtain a slurry. 1.0 g (dry basis) of the slurry was coated on the same honeycomb-type cordierite filter. The filter was then dried and calcined in the same manner as in the preparation of the second catalyst of Example 8 to prepare a second cleaner part coated with a second catalyst carrying 5 weight % of $V_2O_5$.

An exhaust gas cleaner obtained by charging into a reactor tube the first cleaner part on the inlet side and the second cleaner part on the outlet side was subjected to the same test as in Example 8. The results are shown in Table 4.

### Example 10

In the same manner as in Example 9, a second cleaner part coated with a second catalyst caring 4 weight

% of WO$_3$ and 2 weight % of V$_2$O$_3$ was prepared.

An exhaust gas cleaner obtained by charging into a reactor tube the first cleaner part prepared in Example 9 on the inlet side and the second cleaner part obtained above on the outlet side was subjected to the same test as in Example 8. The results are shown in Table 4.

## Comparative Example 7

A catalyst carrying 4 weight % of Ag was prepared in the same manner as in Example 1 except for using commercially available γ-alumina pellets (diameter: 1.5 mm, length: 2-3 mm, specific surface area: 260 m$^2$/g).

An exhaust gas cleaner obtained by charging into a reactor tube 3.6 g of the catalyst was subjected to the same test as in Example 8. The results are shown in Table 4.

## Comparative Example 8

An exhaust gas cleaner was prepared by charging into a reactor tube 7.2 g of the catalyst obtained in Comparative Example 7, and was subjected to the same test as in Example 8. The results are shown in Table 4.

Table 4

| Removal Ratio of Nitrogen Oxides (%) | | | | | |
|---|---|---|---|---|---|
| Temp. (°C) | Ex. 8 | Ex. 9 | Ex. 10 | Com. Ex. 7 | Com. Ex. 8 |
| 300 | 65 | 68 | 64 | 26 | 50 |
| 350 | 75 | 78 | 75 | 42 | 65 |
| 400 | 90 | 95 | 94 | 52 | 80 |
| 450 | 94 | 98 | 97 | 60 | 84 |
| 500 | 76 | 73 | 75 | 50 | 75 |
| 550 | 48 | 45 | 48 | 36 | 44 |
| 600 | 38 | 36 | 38 | 20 | 36 |

As is clear from Table 4, the exhaust gas cleaners of Examples 8-10 showed high NOx removal ratios in a wide temperature range of the exhaust gas. On the other hand, the exhaust gas cleaners of Comparative Examples 7 and 8 which include only the Ag component were effective only a narrow temperature range.

## Example 11

A first catalyst (pellets of 1.5 mm diameter and 2-3 mm length) comprising silica-alumina composite oxide (SiO$_2$ content: 5 weight %, specific surface area: 350 m$^2$/g) carrying 4 weight % of Ag was prepared in the same manner as in Example 1.

Separately, a transition metal catalyst comprising titania (specific surface area: 50 m$^2$/g) carrying 9 weight % of W was prepared in the same manner as in Example 8.

Further, a Pt catalyst comprising γ-alumina (specific surface area: 260 m$^2$/g) carrying 0.2 weight % of Pt was prepared by immersing the γ-alumina in an aqueous solution of chloroplatinic acid, drying and then calcining the resulting γ-alumina by stepwise-heating to 700°C.

The transition metal catalyst and the Pt catalyst was mixed at a weight ratio of 40:1 to obtain a slurry. The slurry was then formed into pellets of 1.5 mm diameter and 2-3 mm length to prepare a second catalyst (mixed catalyst).

An exhaust gas cleaner obtained by charging into a reactor pipe 3.6 g of the first catalyst on the inlet side and 3.6 g of the second catalyst on the outlet side was subjected to the same test as in Example 5 at each exhaust gas temperature shown in Table 5 (apparent space velocity: about 30,000 h$^{-1}$ at the first catalyst and about 30,000 h$^{-1}$ at the second catalyst). The results are shown in Table 5.

### Example 12

A first cleaner part (honeycomb-type cordierite filter) coated with a first catalyst comprising silica-alumina carrying 4 weight % of AgCl was prepared in the same manner as in Example 6.

Separately, a transition metal catalyst comprising titania powder carrying 5 weight % of $V_2O_5$ was prepared by the same manner as in Example 9 except for coating on the honeycomb-type cordierite filter.

Further, a Pt catalyst comprising silica (specific surface area: 360 $m^2/g$) carrying 0.2 weight % of Pt was prepared in the same procedure as in Example 11.

A slurry of the transition metal catalyst and the Pt catalyst in the weight ratio of 20:1 was coated on the honeycomb-type cordierite filter of the same type as the first cleaner part, and followed the same drying and calcining steps as in Example 6 to prepare a second cleaner part coated with the second catalyst (mixed catalyst).

An exhaust gas cleaner obtained by charging into a reactor tube the first cleaner part on the inlet side and the second cleaner part on the outlet side was subjected to the same test as in Example 11. The results are shown in Table 5.

### Example 13

In the same manner as in Example 12, a transition metal catalyst comprising titania powder (specific surface area: 50 $m^2/g$) caring 4 weight % of $WO_3$ and 2 weight % of $V_2O_3$ was prepared.

By using a slurry of the above transition metal catalyst and the Pt catalyst of Example 12 in the weight ratio of 10:1, a second cleaner part (honeycomb-type cordierite filter) was prepared in the same manner as in Example 12.

An exhaust gas cleaner obtained by charging into a reactor tube the first cleaner part of Example 12 on the inlet side and the second cleaner part on the outlet side was subjected to the same test as in Example 11. The results are shown in Table 5.

### Comparative Example 9

An exhaust gas cleaner obtained by charging into a reactor tube 3.6 g of the same catalyst carrying 4 weight % of Ag as in Comparative Example 7 was subjected to the same test as in Example 11 (apparent space velocity: about 30,000 $h^{-1}$). The results are shown in Table 5.

### Comparative Example 10

An exhaust gas cleaner prepared by charging into a reactor tube 7.2 g of the same catalyst as in Comparative Example 7 was subjected to the same test as in Example 11 (apparent space velocity: about 15,000 $h^{-1}$). The results are shown in Table 5.

Table 5

| Removal Ratios of Nitrogen Oxides (NOx), Carbon Monoxide (CO) and Hydrocarbons (HC) | | | | | | |
|---|---|---|---|---|---|---|
| Temp. (°C) | Removed Components | Removal Ratio (%) | | | | |
| | | Ex. 11 | Ex. 12 | Ex. 13 | Com. Ex. 9 | Com. Ex. 10 |
| 300 | NOx | 70 | 72 | 68 | 26 | 50 |
| | CO | 75 | 76 | 70 | 31 | 45 |
| | HC | 55 | 57 | 53 | 25 | 30 |
| 350 | NOx | 79 | 83 | 78 | 42 | 65 |
| | CO | 81 | 84 | 78 | 52 | 61 |
| | HC | 60 | 62 | 58 | 27 | 38 |
| 400 | NOx | 90 | 95 | 94 | 52 | 80 |
| | CO | 86 | 84 | 82 | 58 | 65 |
| | HC | 72 | 73 | 75 | 34 | 41 |
| 450 | NOx | 94 | 98 | 97 | 60 | 84 |
| | CO | 90 | 96 | 92 | 68 | 75 |
| | HC | 75 | 78 | 80 | 58 | 61 |
| 500 | NOx | 76 | 73 | 75 | 50 | 75 |
| | CO | 100 | 100 | 100 | 76 | 82 |
| | HC | 96 | 98 | 98 | 65 | 72 |
| 550 | NOx | 50 | 48 | 52 | 38 | 47 |
| | CO | 100 | 100 | 100 | 82 | 92 |
| | HC | 100 | 100 | 100 | 71 | 82 |
| 600 | NOx | 40 | 38 | 40 | 26 | 38 |
| | CO | 100 | 100 | 100 | 88 | 96 |
| | HC | 100 | 100 | 100 | 78 | 84 |

As is clear from Table 5, comparing with Comparative Examples 9 and 10, Examples 11-13 showed high NOx removal ratios in a wide temperature range of the exhaust gas as well as in a lower temperature range.

**Example 14**

Except for using commercially available alumina pellets (diameter: 1.5 mm, length: 2-3 mm, specific surface area: 260 m²/g) in stead of the silica-alumina composite oxide, the same procedures for preparing the catalysts and exhaust gas cleaner and the same test as in Example 11 were repeated. The results of the test are shown in Table 6.

**Examples 15 and 16**

Except for using alumina powder (specific surface area: 200 m²/g) in stead of the silica-alumina powder, the same procedures for preparing the catalysts and exhaust gas cleaner and the same test as in Examples 12 and 13 were repeated. The results of the test are shown in Table 6.

## Comparative Example 11

The same exhaust gas cleaner as in Comparative Example 9 was subjected to the same test as in Example 11 (apparent space velocity: about 15,000 h$^{-1}$). The results are shown in Table 6.

Table 6

| Removal Ratios of Nitrogen Oxides (NOx), Carbon Monoxide (CO) and Hydrocarbons (HC) | | | | | |
|---|---|---|---|---|---|
| Temp. (°C) | Removed Components | Removal Ratio (%) | | | |
| | | Ex. 14 | Ex. 15 | Ex. 16 | Com. Ex. 11 |
| 300 | NOx | 72 | 73 | 69 | 57 |
| | CO | 75 | 76 | 70 | 33 |
| | HC | 55 | 57 | 53 | 25 |
| 350 | NOx | 80 | 83 | 78 | 68 |
| | CO | 81 | 84 | 78 | 52 |
| | HC | 60 | 62 | 58 | 27 |
| 400 | NOx | 92 | 96 | 94 | 75 |
| | CO | 86 | 84 | 82 | 58 |
| | HC | 72 | 75 | 75 | 34 |
| 450 | NOx | 94 | 98 | 97 | 80 |
| | CO | 94 | 96 | 95 | 68 |
| | HC | 75 | 80 | 80 | 58 |
| 500 | NOx | 76 | 72 | 75 | 70 |
| | CO | 100 | 100 | 100 | 76 |
| | HC | 96 | 98 | 98 | 65 |
| 550 | NOx | 52 | 50 | 53 | 43 |
| | CO | 100 | 100 | 100 | 82 |
| | HC | 100 | 100 | 100 | 71 |
| 600 | NOx | 42 | 40 | 42 | 40 |
| | CO | 100 | 100 | 100 | 88 |
| | HC | 100 | 100 | 100 | 78 |

As is clear from Table 6, comparing with Comparative Example 11, Examples 14-16 showed high NOx removal ratios in a wide temperature range of the exhaust gas as well as in a lower temperature range.

## Claims

1. An exhaust gas cleaner for removing nitrogen oxides by reduction and unburned components of carbon monoxide and hydrocarbons by oxidation from an exhaust gas containing nitrogen oxides, sulfur oxides and oxygen in an amount larger than its stoichiometric amount relative to said unburned components in said exhaust gas, wherein said exhaust gas cleaner is constituted by:

    a first catalyst comprising a first porous inorganic oxide supporting 0.2-15 weight % of at least one Ag component selected from the group consisting of Ag and Ag compounds, and

    an optional second catalyst comprising (a) a Pt catalyst comprising a second porous inorganic oxide

18

supporting 5 weight % or less of at least one Pt component selected from the group consisting of Pt, Pd, Ru, Rh, Ir and Au, (b) a transition metal catalyst comprising a third porous inorganic oxide supporting 0.5-30 weight % of at least one transition metal component selected from the group consisting of W, V and Mo, or (c) a mixture of said Pt catalyst and said transition metal catalyst,

said first porous inorganic oxide being an alumina-based composite oxide comprising alumina and at least one oxide selected from the group consisting of silica, titania and zirconia, said second porous inorganic oxide being alumina, titania, zirconia, silica, zeolite or a composite oxide thereof, and said third porous inorganic oxide being titania or a titania-based composite oxide comprising titania and at least one oxide selected from the group consisting of alumina, silica and zirconia, with the proviso that said first porous inorganic oxide includes alumina when said second catalyst is a mixture of said Pt catalyst and said transition metal catalyst.

2. The exhaust gas cleaner according to claim 1, constituted by a catalyst comprising a porous inorganic oxide supporting 0.2-15 weight % of at least one Ag component selected from the group consisting of Ag and Ag compounds, said porous inorganic oxide being an alumina-based composite oxide comprising alumina and at least one oxide selected from the group consisting of silica, titania and zirconia.

3. The exhaust gas cleaner according to claim 1, constituted by a first catalyst comprising a first porous inorganic oxide supporting 0.2-15 weight % of at least one Ag component selected from the group consisting of Ag and Ag compounds, said first porous inorganic oxide being an alumina-based composite oxide comprising alumina and at least one oxide selected from the group consisting of silica, titania and zirconia, and a second catalyst comprising a second porous inorganic oxide supporting 0.1-5 weight % of at least one Pt component selected from the group consisting of Pt, Pd, Ru, Rh, Ir and Au, said second inorganic oxide being alumina, titania, zirconia, or composite oxides thereof.

4. The exhaust gas cleaner according to claim 1, constituted by a first catalyst comprising a first porous inorganic oxide supporting 0.2-15 weight % of at least one Ag component selected from the group consisting of Ag and Ag compounds, said first porous inorganic oxide being an alumina-based composite oxide comprising alumina and at least one oxide selected from the group consisting of silica, titania and zirconia, and a second catalyst comprising a second porous inorganic oxide supporting 0.5-30 weight % of at least one transition metal component selected from the group consisting of W, V and Mo, the second inorganic oxide being titania or a titania-based composite oxide comprising titania and at least one oxide selected from the group consisting of alumina, silica and zirconia.

5. The exhaust gas cleaner according to claim 1, constituted by a first catalyst comprising a first porous inorganic oxide supporting 0.2-15 weight % of at least one Ag component selected from the group consisting of Ag and Ag compounds, the first porous inorganic oxide being alumina or an alumina-based composite oxide comprising alumina and at least one oxide selected from the group consisting of silica, titania and zirconia, and a second catalyst which is a mixture of a transition metal catalyst comprising a second porous inorganic oxide supporting 0.5-30 weight % of at least one transition metal component selected from the group consisting of W, V and Mo and a Pt catalyst comprising a third porous inorganic oxide supporting 5 weight % or less of at least one Pt component selected from the group consisting of Pt, Pd, Ru, Rh, Ir and Au, said second inorganic oxide being titania or a titania-based composite oxide comprising titania and at least one oxide selected from the group consisting of alumina, silica and zirconia, and said third inorganic porous oxide being alumina, titania, zirconia, silica, zeolite or composite oxides thereof.

6. An exhaust gas cleaner for removing nitrogen oxides by reduction and unburned components of carbon monoxide and hydrocarbons by oxidation from an exhaust gas containing nitrogen oxides, sulfur oxides and oxygen in an amount larger than its stoichiometric amount relative to said unburned components in said exhaust gas, wherein said exhaust gas cleaner is constituted by a catalyst comprising a porous inorganic oxide supporting 0.2-15 weight % of at least one Ag component selected from the group consisting of Ag and Ag compounds and 5 weight % or less of at least one transition metal component selected from the group consisting of W, V, Mn, Mo, Nb and Ta, said porous inorganic oxide being an alumina-based composite oxide comprising alumina and at least one oxide selected from the group consisting of silica, titania and zirconia.

7. The exhaust gas cleaner according to any one of claims 1-6, wherein said Ag compound is at least one selected from the group consisting of silver oxides, silver halides, silver sulfates and silver phosphates.

8. The exhaust gas cleaner according to any one of claims 1-7, wherein said Ag compound is at least one selected from the group consisting of silver oxides and silver chloride.

9. The exhaust gas cleaner according to any one of claims 1-8, wherein said first and second catalysts are coated on a ceramic substrate or a metal substrate.

10. The exhaust gas cleaner according to any one of claims 1-9, wherein said first, second and third porous inorganic oxides are in the form of pellet or granule.

11. The exhaust gas cleaner according to any one of claims 1-10, wherein said alumina-based composite oxide comprises alumina and silica.

12. The exhaust gas cleaner according to any one of claims 1-11, wherein said first catalyst is disposed on an inlet side of said exhaust gas cleaner and said optional second catalyst is disposed on an outlet side of said exhaust gas cleaner.

13. The exhaust gas cleaner according to any one of claims 1 and 5-12, wherein the mixing ratio of said transition metal catalyst to said Pt catalyst in said second catalyst is 2:1 to 100:1 by weight.

14. A method for removing nitrogen oxides by reduction and unburned components of carbon monoxide and hydrocarbons by oxidation from an exhaust gas containing nitrogen oxides, sulfur oxides and oxygen in an amount larger than its stoichiometric amount relative to said unburned components in said exhaust gas, which comprises:
   disposing an exhaust gas cleaner as defined in any one of claims 1 to 13 in a flow path of said exhaust gas;
   introducing into said exhaust gas at least one reducing agent selected from the group consisting of hydrocarbons and oxygen-containing organic compounds having at least two carbon atoms or a fuel containing said at least one reducing agent on an upstream side of said exhaust gas cleaner; and
   bringing the resulting exhaust gas containing said reducing agent into contact with said exhaust gas cleaner at 150-650°C, thereby causing a reaction of said nitrogen oxides with said reducing agent to remove said nitrogen oxides by reduction and unburned components of carbon monoxide and hydrocarbons by oxidation from said exhaust gas.

# FIG. 1

# FIG. 2

# FIG. 3

EP 0 682 975 A1

| European Patent Office | EUROPEAN SEARCH REPORT | Application Number EP 95 30 2636 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| E,D | EP-A-0 661 089 (KK RIKEN) 5 July 1995 * claims 1-10 * | 1-14 | B01D53/94 B01J23/68 B01J23/64 |
| P,X, D | EP-A-0 640 380 (KK RIKEN ET AL.) 1 March 1995 * claims 1-10 * | 1,2,4, 6-12,14 | |
| P,X | EP-A-0 605 251 (KK RIKEN) 6 July 1994 * page 5, line 27 - line 33; claims 1-17 * | 1-3, 5-12,14 | |
| X,D | EP-A-0 577 438 (KK RIKEN) * claims 1-46 * | 1-14 | |
| X | EP-A-0 362 960 (SAKAI CHEMICAL IND. CO. LTD.) * page 3, line 24 - line 27; claims 1-8 * | 1,2, 6-11,13, 14 | |
| A | DE-A-41 28 629 (BASF AG) * the whole document * | 1-3,6-11 | TECHNICAL FIELDS SEARCHED (Int.Cl.6) |
| A | DE-A-40 08 371 (KK RIKEN) * page 5, line 34 - page 6, line 13; claims 1-17 * | 1-14 | B01D B01J |

The present search report has been drawn up for all claims

| Place of search | Date of completion of the search | Examiner |
|---|---|---|
| THE HAGUE | 11 September 1995 | Eijkenboom, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

24